(19) Europäisches Patentamt / European Patent Office / Office européen des brevets

(11) **EP 4 645 714 A1**

(12) **EUROPEAN PATENT APPLICATION**
published in accordance with Art. 153(4) EPC

(43) Date of publication:
**05.11.2025 Bulletin 2025/45**

(21) Application number: **24746988.5**

(22) Date of filing: **26.01.2024**

(51) International Patent Classification (IPC):
**H04B 7/185** (2006.01)

(52) Cooperative Patent Classification (CPC):
**H04B 7/185; H04W 16/10; H04W 16/18**

(86) International application number:
**PCT/CN2024/074175**

(87) International publication number:
**WO 2024/156281 (02.08.2024 Gazette 2024/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.01.2023 CN 202310127842**

(71) Applicant: **Huawei Technologies Co., Ltd.**
**Shenzhen, Guangdong 518129 (CN)**

(72) Inventors:
• **ZHOU, Jianwei**
**Shenzhen, Guangdong 518129 (CN)**

• **LUO, Hejia**
**Shenzhen, Guangdong 518129 (CN)**
• **XU, Chenlei**
**Shenzhen, Guangdong 518129 (CN)**
• **YU, Tianhang**
**Shenzhen, Guangdong 518129 (CN)**
• **WANG, Jun**
**Shenzhen, Guangdong 518129 (CN)**

(74) Representative: **Pfenning, Meinig & Partner mbB Patent- und Rechtsanwälte**
**Theresienhöhe 11a**
**80339 München (DE)**

(54) **INFORMATION TRANSMISSION METHOD AND APPARATUS**

(57) This application provides an information transmission method and apparatus, to reduce a waste of transmission resources and improve communication performance of a non-terrestrial network. A first communication apparatus receives configuration information of a first time unit, and performs information transmission on a non-terrestrial network channel based on the configuration information of the first time unit. The configuration information indicates a quantity N of symbols in the first time unit and a cyclic prefix CP corresponding to the symbol in the first time unit, a value of N and a value of the CP correspond to a multipath delay spread of the NTN channel, and N is a positive integer.

First communication apparatus — Second communication apparatus

S801: Configuration information of a first time unit

S802: Perform information transmission on an NTN channel based on the configuration information of the first time unit

FIG. 8

EP 4 645 714 A1

**Description**

CROSS-REFERENCE TO RELATED APPLICATIONS

This application claims priority to Chinese Patent Application No. 202310127842.2, filed with the China National Intellectual Property Administration on January 29, 2023 and entitled "INFORMATION TRANSMISSION METHOD AND APPARATUS", which is incorporated herein by reference in its entirety.

TECHNICAL FIELD

Embodiments of this application relate to the field of communication technologies, and in particular, to an information transmission method and apparatus.

BACKGROUND

Non-terrestrial network (non-terrestrial network, NTN) communication is less affected by geographical conditions and has strong coverage, and therefore can be widely used in various scenarios. For example, when natural disasters (such as earthquakes or mudflows) occur, and ground-built communication facilities (such as ground base stations) are vulnerable to damage and cannot perform normal communication, terminal devices may still perform data transmission through satellite communication. In addition, in some areas that are not convenient to set up ground base stations, for example, oceans, deserts, and mountains, the terminal devices may still achieve good communication efficiency through satellites.

In an NTN, for example, in a satellite communication system, a channel environment is mainly direct path, which is less affected by channel multipath than terrestrial network communication. Therefore, a cyclic prefix (cyclic prefix, CP) length defined in an existing terrestrial network is redundant for the NTN. If a CP defined in the existing terrestrial network is still used in the NTN, a waste of transmission resources is caused.

SUMMARY

Embodiments of this application provide an information transmission method and apparatus, to reduce a waste of transmission resources.

According to a first aspect, an embodiment of this application provides an information transmission method, and the method may be applied to a non-terrestrial network NTN. In the method, the first communication apparatus may receive configuration information of a first time unit, and transmit information on an NTN channel based on the configuration information of the first time unit. The configuration information indicates a quantity $N$ of symbols in the first time unit and a cyclic prefix CP corresponding to the symbol in the first time unit, a value of $N$ and a value of the CP correspond to a multipath delay spread of a non-terrestrial network NTN channel, and $N$ is a positive integer. Optionally, the value of the CP may also be understood as a length of the CP.

In the foregoing design, the multipath delay spread of the NTN channel is introduced, and the CP applied to the NTN is designed. Compared with a CP length defined in the terrestrial network, the length of the CP is shorter, and is more matched with an actual channel of the NTN, so that a length redundancy of the CP in the NTN can be avoided, thereby reducing a waste of transmission resources.

In a possible design, duration of the first time unit is the same as duration of a first subframe, and the first subframe is a subframe used for terrestrial network communication. It may be understood that the value of the CP corresponding to the symbol in the first time unit is less than the value of the CP corresponding to the symbol in the first subframe. Shortening the length of the CP may save a quantity of extra symbols. That is, it may be further understood that the quantity of symbols in the first subframe is less than the quantity $N$ of symbols in the first time unit. Compared with a terrestrial network, the NTN uses a shorter CP, and saved symbols may be used for information transmission, for example, transmission of a reference signal, control information, or a data channel, so that effective utilization of transmission resources can be improved.

The following describes in detail a manner of determining the quantity $N$ of symbols and the value of the CP in the first time unit.

In a possible design, the value of $N$ is a minimum value of $n$, $n$ is a positive integer, and a value of $n$ meets the following relational expression:

$$\left\lfloor \frac{Symbol_t \times n}{\frac{Sf_t}{Symbol_t} \times DS} \right\rfloor \geq 1$$

$Symbol_t$ represents duration occupied by one symbol, Sft represents the duration of the first time unit, DS represents the multipath delay spread of the NTN channel, and $\lfloor \ \rfloor$ represents a rounding down operator.

In a possible design, the CP corresponding to the symbol in the first time unit includes $CP_{Long}$ and $CP_{short}$, a value of $CP_{Long}$ is greater than a value of $CP_{short}$, and the value of $CP_{Long}$ and the value of $CP_{short}$ meet the following formula:

$$CP_{short} = \left\lfloor \frac{Symbol_t \times N}{\frac{Sf_t}{Symbol_t} - N} \right\rfloor;$$

and

$$CP_{Long} = \frac{Symbol_t \times N - CP_{short} \times (N-2)}{2}.$$

According to the foregoing design, a CP corresponding to a symbol used for NTN communication is greater than the multipath delay spread of the NTN channel. In addition, when it is ensured that a quantity of extended symbols of a subframe in a terrestrial network is an integer, the CP may be as close as possible to the multipath delay spread of the NTN channel, that is, a length of a CP corresponding to a symbol used for NTN communication is slightly greater than the multipath delay spread of the NTN channel. A shorter CP indicates a smaller quantity of CP overheads and more transmission resources saved.

The following describes in detail a subframe structure or a system frame structure used for NTN communication according to the foregoing design.

In a first possible design, the first time unit is a subframe used for NTN communication, a quantity of symbols included in at least one slot in the first time unit is greater than a quantity of symbols included in any slot in the first subframe, and the first subframe is a subframe used for terrestrial network communication. Optionally, two adjacent slots in the first time unit include an overlapping symbol, and the overlapping symbol is used for transmission of a demodulation reference signal DMRS. In such a design, enhanced transmission can be performed on the DMRS by using a transmission resource (symbol) saved by shortening the CP, so that pilots are evenly distributed, channel estimation performance can be improved, and pilot overheads are not increased.

In a second possible design, a quantity of slots in a first system frame used for terrestrial network communication is less than a quantity of slots in a second system frame used for NTN communication, the second system frame includes a plurality of first time units, and duration of the first system frame is the same as duration of the second system frame. In such a design, a quantity of slots in a system frame is increased by using an extended symbol with a shortened CP, so that a quantity of scheduled slots used for a data channel can be increased, and a throughput of a communication system can be improved.

For example, the first time unit is a subframe used for NTN communication, a quantity of slots in the first time unit is greater than a quantity of slots in the first subframe, and the first subframe is a subframe used for terrestrial network communication. Duration corresponding to at least two slots in the first time unit is different.

In a third possible design, a quantity of symbols in the second system frame used for the NTN is greater than a quantity of symbols in the first system frame used for terrestrial network communication. The extra symbols may be used to increase a resource for mapping a synchronization signal block SSB. That is, it may be understood that a quantity of symbols used for mapping a synchronization signal block SSB in the second system frame is greater than a quantity of symbols used for mapping the SSB in the first system frame. Such a design can increase a beam sweeping resource and reduce a beam sweeping cycle.

According to a second aspect, an embodiment of this application provides an information transmission method, and the method may be applied to a non-terrestrial network NTN. In the method, a second communication apparatus may send configuration information of a first time unit to a first communication apparatus, and transmit information on an NTN channel based on the configuration information of the first time unit. The configuration information indicates a quantity N of symbols in the first time unit and a cyclic prefix CP corresponding to the symbol in the first time unit, a value of N and a value of the CP correspond to a multipath delay spread of a non-terrestrial network NTN channel, and N is a positive integer. Optionally, the value of the CP may also be understood as a length of the CP.

In a possible design, duration of the first time unit is the same as duration of a first subframe, and the first subframe is a subframe used for terrestrial network communication. It may be understood that the value of the CP corresponding to the symbol in the first time unit is less than the value of the CP corresponding to the symbol in the first subframe. Shortening the length of the CP may save a quantity of extra symbols. That is, it may be further understood that the quantity of symbols in the first subframe is less than the quantity N of symbols in the first time unit.

For a manner of determining the quantity N of symbols in the first time unit and the value of the CP, refer to the possible design in the first aspect. Details are not described again in this embodiment of this application.

For a subframe structure or a system frame structure used for NTN communication, refer to the possible design in the first aspect for understanding. Details are not described again in this embodiment of this application.

According to a third aspect, an embodiment of this application provides an information transmission apparatus. The information transmission apparatus may be a first communication apparatus, may be an apparatus, a module, a chip, or the like in the first communication apparatus, or may be an apparatus that can be used in combination with the first communication apparatus. In a design, the information transmission apparatus may include a module in a one-to-one correspondence with the method/operation/step/action in the first aspect. The module may be a hardware circuit or software, or may be implemented in a combination of the hardware circuit and the software. In a design, the information transmission apparatus may include a processing module and a communication module.

The communication module is configured to receive configuration information of a first time unit, where the configuration information indicates a quantity N of symbols in the first time unit and a cyclic prefix CP corresponding to the symbol in the first time unit, a value of N and a value of the CP correspond to a multipath delay spread of a non-terrestrial network NTN channel, and N is a positive integer. The processing module is configured to perform information transmission on the NTN channel based on the configuration information of the first time unit.

In a possible design, duration of the first time unit is the same as duration of a first subframe, and the first subframe is a subframe used for terrestrial network communication. It may be understood that the value of the CP corresponding to the symbol in the first time unit is less than the value of the CP corresponding to the symbol in the first subframe. Shortening the length of the CP may save a quantity of extra symbols. That is, it may be further understood that the quantity of symbols in the first subframe is less than the quantity N of symbols in the first time unit.

For a manner of determining the quantity N of symbols in the first time unit and the value of the CP, refer to the possible design in the first aspect. Details are not described again in this embodiment of this application. For a subframe structure or a system frame structure used for NTN communication, refer to the possible design in the first aspect for understanding. Details are not described again in this embodiment of this application.

According to a fourth aspect, an embodiment of this application provides an information transmission apparatus. The information transmission apparatus may be a second communication apparatus, may be an apparatus, a module, a chip, or the like in the second communication apparatus, or may be an apparatus that can be used in combination with the second communication apparatus. In a design, the information transmission apparatus may include a module in a one-to-one correspondence with the method/operation/step/action in the second aspect. The module may be a hardware circuit or software, or may be implemented in a combination of the hardware circuit and the software. In a design, the information transmission apparatus may include a processing module and a communication module.

The communication module is configured to send configuration information of a first time unit, for example, send the configuration information of the first time unit to a first communication apparatus, where the configuration information indicates a quantity N of symbols in the first time unit and a cyclic prefix CP corresponding to the symbol in the first time unit, a value of N and a value of the CP correspond to a multipath delay spread of a non-terrestrial network NTN channel, and N is a positive integer. The processing module is configured to perform information transmission on the NTN channel based on the configuration information of the first time unit.

In a possible design, duration of the first time unit is the same as duration of a first subframe, and the first subframe is a subframe used for terrestrial network communication. It may be understood that the value of the CP corresponding to the symbol in the first time unit is less than the value of the CP corresponding to the symbol in the first subframe. Shortening the length of the CP may save a quantity of extra symbols. That is, it may be further understood that the quantity of symbols in the first subframe is less than the quantity N of symbols in the first time unit.

For a manner of determining the quantity N of symbols in the first time unit and the value of the CP, refer to the possible design in the first aspect. Details are not described again in this embodiment of this application.

For a subframe structure or a system frame structure used for NTN communication, refer to the possible design in the first aspect for understanding. Details are not described again in this embodiment of this application.

According to a fifth aspect, an embodiment of this application provides an information transmission apparatus. The information transmission apparatus includes a processor, configured to implement the method according to the first aspect. The processor is coupled to a memory, the memory is configured to store instructions and data, and when the processor executes the instructions stored in the memory, the method according to the first aspect may be implemented. Optionally, the communication apparatus may further include the memory. The communication apparatus may further include a communication interface, and the communication interface is used by the apparatus to communicate with another device. For example, the communication interface may be a transceiver, a circuit, a bus, a module, a pin, or another type of communication interface.

The processor is configured to receive, by using the communication interface, configuration information of a first time unit, and transmit information on the NTN channel based on the configuration information of the first time unit. The configuration information indicates a quantity N of symbols in the first time unit and a cyclic prefix CP corresponding to the symbol in the first time unit, a value of N and a value of the CP correspond to a multipath delay spread of a non-terrestrial network NTN channel, and N is a positive integer.

According to a sixth aspect, an embodiment of this application provides an information transmission apparatus. The information transmission apparatus includes a processor, configured to implement the method according to the second aspect. The processor is coupled to a memory. The memory is configured to store instructions and data. When the processor executes the instructions stored in the memory, the method according to the second aspect may be implemented. Optionally, the communication apparatus may further include the memory. The communication apparatus may further include a communication interface, and the communication interface is used by the apparatus to communicate with another device. For example, the communication interface may be a transceiver, a circuit, a bus, a module, a pin, or another type of communication interface.

The processor is configured to send configuration information of a first time unit by using the communication interface, and transmit information on an NTN channel based on the configuration information of the first time unit. The configuration information indicates a quantity N of symbols in the first time unit and a cyclic prefix CP corresponding to the symbol in the first time unit, a value of N and a value of the CP correspond to a multipath delay spread of a non-terrestrial network NTN channel, and N is a positive integer.

According to a seventh aspect, this disclosure provides a communication system, including the communication apparatus according to the third aspect or the fifth aspect and the communication apparatus according to the fourth aspect or the sixth aspect.

According to an eighth aspect, this disclosure further provides a computer program. When the computer program is run on a computer, the computer is enabled to perform the method according to the first aspect or the second aspect.

According to a ninth aspect, this disclosure further provides a computer program product, including instructions. When the instructions are run on a computer, the computer is enabled to perform the method according to the first aspect or the second aspect.

According to a tenth aspect, this disclosure further provides a computer-readable storage medium. The computer-readable storage medium stores a computer program or instructions, and when the computer program or the instructions are run on a computer, the computer is enabled to perform the method according to the first aspect or the second aspect.

According to an eleventh aspect, this disclosure further provides a chip. The chip is configured to read a computer program stored in a memory, to perform the method according to the first aspect or the second aspect, or the chip includes a circuit configured to perform the method according to the first aspect or the second aspect.

According to a twelfth aspect, this disclosure further provides a chip system. The chip system includes a processor, configured to support an apparatus in implementing the method according to the first aspect or the second aspect. In a possible design, the chip system further includes a memory, and the memory is configured to store a program and data that are necessary for the apparatus. The chip system may include a chip, or may include a chip and another discrete component.

For effects of the solution provided in any one of the second aspect to the twelfth aspect, refer to corresponding descriptions in the first aspect.

BRIEF DESCRIPTION OF DRAWINGS

FIG. 1 is a diagram of an architecture of a terrestrial network communication system according to an embodiment of this application;
FIG. 2 is a diagram of an architecture of an NTN communication system according to an embodiment of this application;
FIG. 3 is a diagram of an architecture of a 5G satellite communication system according to an embodiment of this application;
FIG. 4 is a diagram of an architecture of a satellite communication system according to an embodiment of this application;
FIG. 5A is a diagram of a structure of an NTN subframe according to an embodiment of this application;
FIG. 5B is a diagram of a transmission resource of a DMRS according to an embodiment of this application;
FIG. 6A is another diagram of a structure of an NTN subframe according to an embodiment of this application;
FIG. 6B is another diagram of a transmission resource of a DMRS according to an embodiment of this application;

FIG. 7A is a diagram of NTN slot division according to an embodiment of this application;

FIG. 7B is another diagram of NTN slot division according to an embodiment of this application;

FIG. 8 is a schematic flowchart of an information transmission method according to an embodiment of this application;

FIG. 9 is a diagram of a structure of an information transmission apparatus according to an embodiment of this application; and

FIG. 10 is another diagram of a structure of an information transmission apparatus according to an embodiment of this application.

<u>DESCRIPTION OF EMBODIMENTS</u>

To make objectives, technical solutions, and advantages of embodiments of this application clearer, the following further describes embodiments of this application in detail with reference to the accompanying drawings.

"At least one (item)" in embodiments of this application indicates one or more (items). "A plurality of (items)" means two (items) or more than two (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although terms such as "first" and "second" may be used in embodiments of this application to describe objects, these objects should not be limited by these terms. These terms are merely used to distinguish the objects from each other.

The terms "including", "having", and any variants thereof in the following descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the word "example" or "for example" is used to represent giving an example, an illustration, or a description. Any method or design solution described as an "example" or "for example" in embodiments of this application should not be explained as being preferred or advantageous over another method or design solution. To be precise, use of the word such as "example" or "for example" is intended to present a relative concept in a specific manner.

Technologies provided in embodiments of this application may be applied to various communication systems, for example, a non-terrestrial network (non-terrestrial network, NTN) system such as a satellite communication system, a high altitude platform station (high altitude platform station, HAPS) communication system, or a drone, an integrated communication and navigation (integrated communication and navigation, IcaN) system, a global navigation satellite system (global navigation satellite system, GNSS), and an ultra-dense low-orbit satellite communication system. The communication system to which embodiments of this application are applied may be integrated with a terrestrial communication system. For example, the terrestrial communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), and a future mobile communication system such as a 6G communication system.

A network element in the communication system may send a signal to another network element or receive a signal from another network element. The signal may include information, signaling, data, or the like. The network element may alternatively be replaced with an entity, a network entity, a device, a communication device, a communication module, a node, a communication node, or the like. In embodiments of this application, the network element is used as an example for description.

For example, the terrestrial communication system may include at least one terminal device and at least one network device. The network device may send a downlink signal to the terminal device, and/or the terminal device may send an uplink signal to the network device. In addition, it may be understood that if the communication system includes a plurality of terminal devices, the plurality of terminal devices may also send signals to each other. That is, both a network element that sends a signal and a network element that receives a signal may be terminal devices.

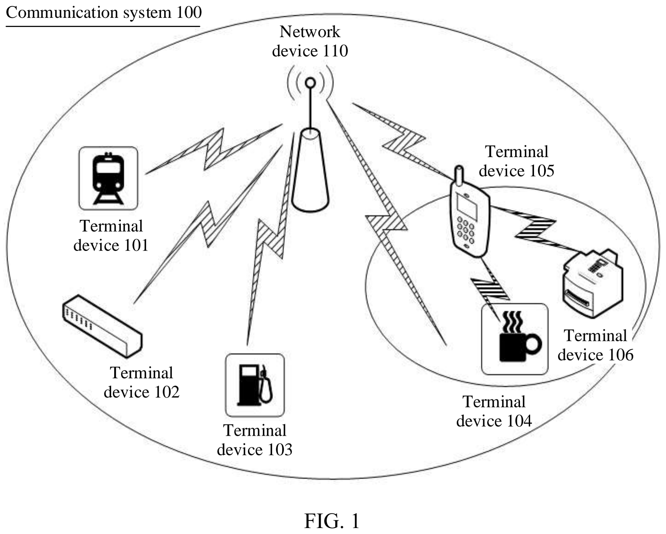

FIG. 1 shows an architecture of a mobile communication system. The communication system 100 may include a network device 110 and terminal devices 101 to 106. It should be understood that the communication system 100 may include more or fewer network devices or terminal devices. The network device or the terminal device may be hardware, may be software obtained through functional division, or may be a combination thereof. In addition, the terminal devices 104 to 106 may also form a communication system. For example, the terminal device 105 may send downlink data to the terminal device 104 or the terminal device 106. The network device or the terminal device may communicate with each other by using another device or network element. The network device 110 may send downlink data to the terminal devices 101 to 106, or may receive uplink data sent by the terminal devices 101 to 106. Certainly, the terminal devices 101 to 106 may also send uplink data to the network device 110, or may receive downlink data sent by the network device 110.

The network device 110 is a node in a radio access network (radio access network, RAN), and may also be referred to as a base station or a RAN node (or device). Currently, some examples of the access network device 101 include: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP) or a transmission reception point (transmission reception point, TRP), a satellite, a drone, and the like. The network device may alternatively be a base station (next generation NodeB, gNB), a TRP, or a TP in a 5G system, or one antenna panel or one group of antenna panels (including a plurality of antenna panels) of a base station in a 5G system. In addition, the network device may alternatively be a network node that forms a gNB or a TP, for example, a BBU or a distributed unit (distributed unit, DU). Alternatively, the network device may be a device responsible for a network side function in a device-to-device (device-to-device, D2D) communication system, a machine-to-machine (machine-to-machine, M2M) communication system, an Internet of Things (Internet of Things, IoT) communication system, an Internet of Vehicles communication system, or another communication system. The network device 110 may alternatively be a network device in a future possible communication system. A specific technology and a specific device form that are used by the network device are not limited in embodiments of this application.

The terminal devices 101 to 106 each may also be referred to as user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like, are devices that provide voice or data connectivity for a user, or may be internet of things devices. For example, the terminal devices 101 to 106 each include a handheld device, a vehicle-mounted device, or the like that has a wireless connection function. Currently, the terminal devices 101 to 106 each may be a mobile phone (mobile phone), a tablet computer, a notebook computer, a palmtop computer, a mobile internet device (mobile internet device, MID), a wearable device (for example, a smartwatch, a smart band, or a pedometer), a vehicle-mounted device (for example, a vehicle-mounted device on an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an unmanned aerial vehicle, or an aircraft), or the like. The terminal devices 101 to 106 each may alternatively be another device having a terminal function. For example, the terminal devices 101 to 106 may alternatively be devices having a terminal function in D2D communication.

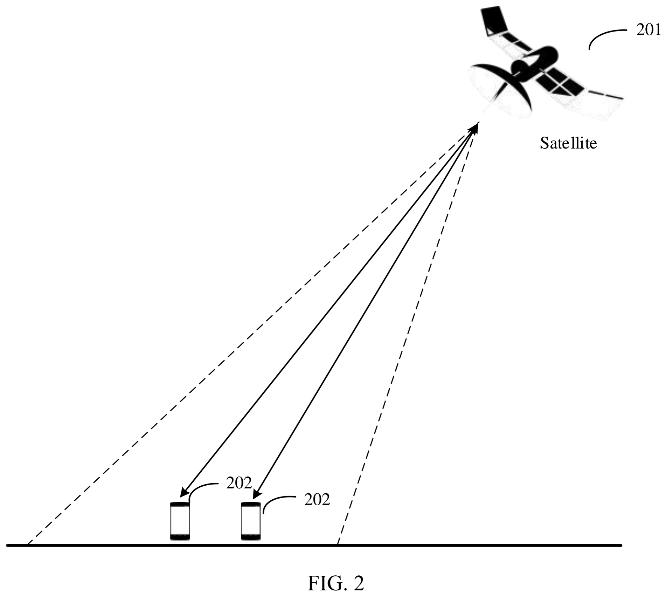

Based on descriptions of the architecture of the terrestrial communication system shown in FIG. 1, an example in which embodiments of this application may be applied to a non-terrestrial network (non-terrestrial network, NTN) communication system is used for description. An NTN includes nodes such as a satellite network, a high-altitude platform, and a drone, has significant advantages such as global coverage, long-distance transmission, flexible networking, easy deployment, and being not limited by geographical conditions, and has been widely applied to a plurality of fields such as maritime communication, positioning and navigation, disaster relief, scientific experiments, video broadcasting, and earth observation. A terrestrial 5G network and a satellite network are integrated and complement each other to form an integrated communication network that provides seamless global coverage by sea, land, air, space, and ground, and meet a plurality of ubiquitous service requirements of users. In embodiments of this application, for example, NTN communication is satellite communication, or in other words, the NTN communication system is a satellite system. As shown in FIG. 2, the NTN communication system includes a satellite 201 and terminal devices 202. For explanation of the terminal devices 202, refer to the related descriptions of the terminal devices 101 to 106. The satellite 201 may also be referred to as a high altitude platform, a high altitude aircraft, or a satellite base station. When the NTN communication system is associated with a terrestrial network communication system, the satellite 201 may be considered as one or more network devices in an architecture of the terrestrial network communication system. The satellite 201 provides a communication service for the terminal devices 202, and the satellite 201 may further be connected to a core network device. For a structure and a function of the network device 201, refer to the foregoing descriptions of the network device 201. For a communication manner between the satellite 201 and the terminal devices 202, refer to descriptions in FIG. 1. Details are not described herein again. The solutions in embodiments of this application may also be directly applied to a terrestrial communication network, or may be applied to a terrestrial communication network after being slightly modified in a method that can be figured out by a person skilled in the art. Details are not described herein.

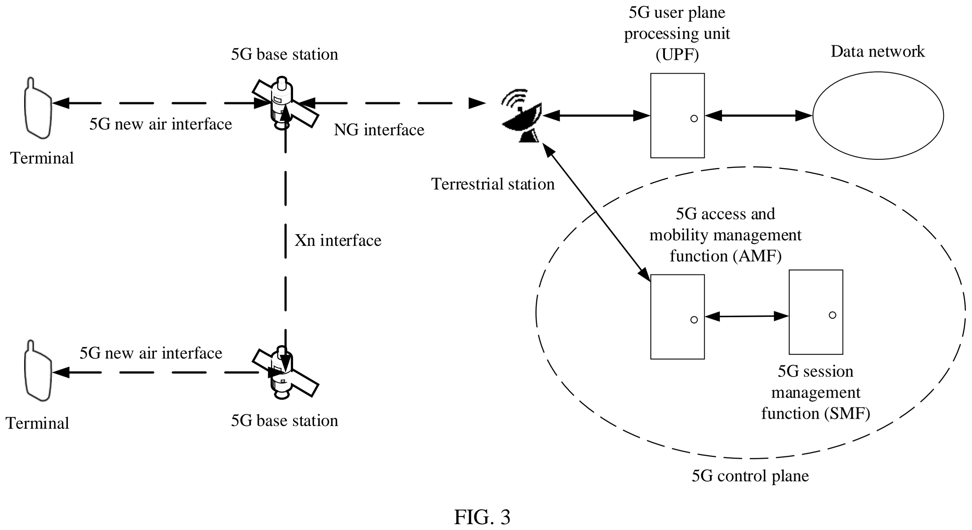

5G is used as an example. An architecture of a 5G satellite communication system is shown in FIG. 3. A terrestrial terminal device accesses a network through a 5G new air interface. A gNB is deployed on a satellite, and is connected to a terrestrial core network through a radio link. In addition, a radio link exists between satellites, and is used to complete signaling exchange and user data transmission between base stations. Devices and interfaces in FIG. 3 are described as follows:

A 5G core network provides services such as user access control, mobility management, session management, user security authentication, and accounting. The 5G core network includes a plurality of functional units, which can be classified into control-plane functional entities and data-plane functional entities. An access and mobility management function (AMF) is responsible for user access management, security authentication, and mobility management. A user plane unit (UPF) is responsible for managing functions such as user plane data transmission and traffic statistics collection.

A terrestrial station is responsible for forwarding signaling and service data between a satellite base station and the 5G core network.

A 5G new air interface is a radio link between a terminal and a base station.

An Xn interface is an interface between 5G base stations, and is mainly used for exchanging signaling such as handover signaling.

An NG interface is an interface between the 5G base station and the 5G core network, and is mainly used for exchanging signaling such as NAS signaling of the core network and service data of a user.

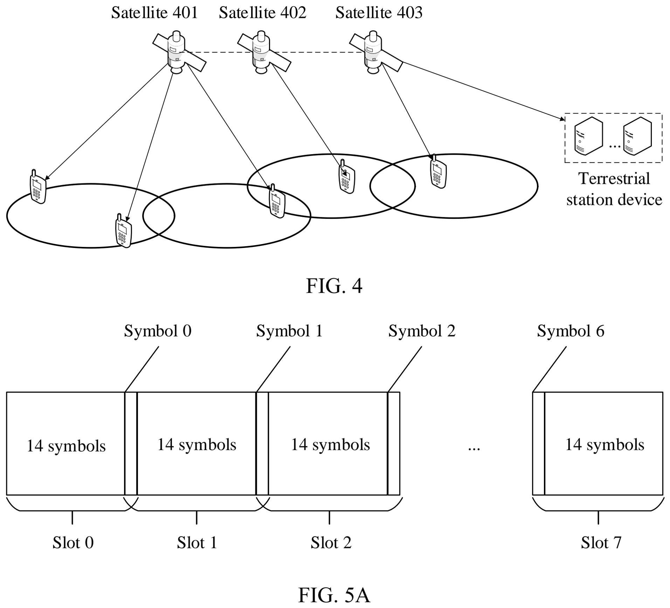

FIG. 4 is a diagram of an architecture of another possible satellite communication system to which this application is applicable. If a satellite communication system is compared to a terrestrial communication system, a satellite may be considered as one or more network devices on the ground, for example, a base station. An access point 1, an access point 2, and even an access point 3 to an access point n (not shown in the figure), and a satellite provide a communication service for a terminal device, and the satellite may be further connected to a core network device (for example, an access and mobility management function (access and mobility management function, AMF)). Examples of some satellites include low earth orbit (low earth orbit, LEO) satellites at an orbit altitude ranging from 500 kilometers (km) to 2,000 km, medium earth orbit (medium earth orbit, MEO) satellites at an orbit altitude ranging from 2,000 km to 20,000 km, high earth orbit (high earth orbit, HEO) satellites at an orbit altitude of more than 20,000 km (an orbit is an elliptical orbit), synchronous earth orbit (geostationary earth orbit, GEO) satellites at orbit altitude of 35,800 km, and non-geostationary earth orbit (non-geostationary earth orbit, NGEO) satellites. Compared with the medium earth orbit satellite and the high earth orbit satellite, the low earth orbit satellite is closer to the earth surface, and has a lower propagation delay and a lower path loss.

For example, the satellite communication system in FIG. 4 includes a satellite 401, a satellite 402, and a satellite 403. Each satellite may provide a communication service, a navigation service, a positioning service, and the like for the terminal device through a plurality of beams. The satellite in this scenario may be an LEO satellite. The satellite uses a plurality of beams to cover a service area, and different beams may be used to perform communication in one or more manners of time division, frequency division, and space division. The satellite performs wireless communication with the terminal device by broadcasting a communication signal, a navigation signal, and the like. The satellite may perform wireless communication with a terrestrial station device. As shown in FIG. 4, the satellite 403 is connected to the terrestrial station device. The satellite mentioned in this embodiment of this application may be a satellite base station, may include an orbit receiver or a repeater configured to relay information, or may be a network side device mounted on the satellite.

The terrestrial station device may be, for example, a device in a core network (core network, CN) in an existing mobile communication architecture (for example, a 3GPP access architecture of a 5G network) or a device in a core network in a future mobile communication architecture. As a bearer network, the core network provides an interface to a data network, provides communication connection, authentication, management, and policy control for user equipment (UE), bears a data service, and the like. The CN may further include an access and mobility management function (access and mobility management function, AMF) network element, a session management function (session management function, SMF) network element, an authentication server function (authentication server function, AUSF) network element, a policy control function (policy control function, PCF) network element, a user plane function (user plane function, UPF) network element, and the like. The AMF network element is configured to manage access and mobility of UE, and is mainly responsible for functions such as UE authentication, UE mobility management, and UE paging.

According to an on-satellite processing capability, the satellite communication system includes a transparent transmission satellite architecture and a non-transparent transmission satellite architecture. Transparent transmission, also known as transparent (transparent) forwarding or bent-pipe forwarding means that a signal is provided only with frequency conversion and amplification on a satellite, and the signal is transparent to the satellite, as if the signal does not exist. Non-transparent transmission, also known as regeneration (regenerative) transmission, is related to satellite access and transmission, that is, a satellite has some or all of functions of a base station. For example, the satellite 401 and the satellite 402 in FIG. 4 have non-transparent transmission satellite architectures, and the satellite 403 has a transparent transmission satellite architecture. In addition, the satellite may work in quasi earth-fixed mode or satellite-fixed mode.

Satellite communication systems may be classified into non-gaze satellite systems and gaze satellite systems based on whether a satellite beam moves with a satellite. In the non-gaze satellite system, the satellite beam moves with the satellite, each beam angle of the satellite does not change with time, and relatively frequent beam switching occurs at a fixed terrestrial point in a period during which the satellite flies over top. In the gaze satellite system, a beam angle of the satellite is adjusted in a specified manner, and continuous observation can be implemented for a fixed terrestrial point by using the satellite through switching of the beam angle.

A network device in the terrestrial communication system and a satellite in the NTN communication system are collectively considered as network devices. An apparatus configured to implement a function of a network device may be a network device; or may be an apparatus that can support a network device in implementing the function of the network device, for example, a chip system, and the apparatus may be mounted in the network device. In the technical solutions provided in embodiments of this application, the technical solutions provided in embodiments of this application are described by using an example in which the apparatus configured to implement the function of the network device is a network device.

In embodiments of this application, an apparatus configured to implement a function of a terminal device may be a terminal device; or may be an apparatus that can support a terminal device in implementing a function of the terminal device, for example, a chip system, a hardware circuit, a software module, or a combination of a hardware circuit and a software module, and the apparatus may be mounted in the terminal device or used in combination with the terminal device. In embodiments of this application, the chip system may include a chip, or may include a chip and another discrete component. In the technical solutions provided in embodiments of this application, the following uses an example in which an apparatus configured to implement a function of a terminal device is a terminal device to describe the technical solutions provided in embodiments of this application.

For ease of understanding of embodiments of this application, an application scenario of this application is described below. A service scenario described in embodiments of this application is intended to describe the technical solutions of embodiments of this application more clearly, and does not constitute a limitation on the technical solutions provided in embodiments of this application. It can be learned by a person of ordinary skill in the art that, with emergence of a new service scenario, the technical solutions provided in embodiments of this application are also applicable to a similar technical problem.

In the NTN, for example, in a satellite communication system, a channel environment is mainly a direct path, and is less affected by channel multipath than that in terrestrial network communication. Therefore, a cyclic prefix (cyclic prefix, CP) size defined in the existing terrestrial network is relatively redundant for the NTN. If the CP defined in the existing terrestrial network is still used in the NTN, a waste of transmission resources is caused.

An NR system in a terrestrial network is used as an example. Table 1 shows a subframe structure in the NR system. In the subframe structure, to resist channel multipath impact, a CP needs to be greater than a multipath delay spread of the NR channel, and overheads of a cyclic prefix CP corresponding to an orthogonal frequency division multiplexing (orthogonal frequency division multiplexing, OFDM) symbol in different subcarrier spacings (subcarrier spacings, SCSs) are approximately 7%. In this embodiment of this application, for example, an OFDM symbol is briefly referred to as a symbol.

Table 1

| Numerology (μ) | Subcarrier spacing SCS (kHz) | Long CP (Long CP) (μs) | Short CP (Short CP) (μs) | CP overhead | Quantity of symbols in 1 ms |
|---|---|---|---|---|---|
| 0 | 15 | 5.2 | 4.69 | 7.0% | 14 |
| 1 | 30 | 2.86 | 2.34 | 7.0% | 28 |
| 2 | 60 | NCP: 1.69 ECP: 4.17 | NCP: 1.17 ECP: 4.17 | 7.0% | 56 |
| 3 | 120 | 1.11 | 0.59 | 7.0% | 112 |
| 4 | 240 | 0.81 | 0.29 | 7.0% | 224 |
| 5 | 480 | 0.67 | 0.15 | 7.0% | 448 |
| 6 | 960 | 0.59 | 0.07 | 7.0% | 896 |

As shown in Table 1, when the SCS is 60 kHz, long CPs are classified into normal cyclic prefixes (normal Cyclic Prefixes, NCPs) and extended cyclic prefixes (extended Cyclic Prefixes, ECPs), and short CPs are also classified into NCPs and ECPs.

A multipath delay spread (delay spread, DS) of an NTN channel is related to an elevation angle of a terminal device relative to a satellite device, for example, may be understood according to a delay spread of an NTN channel described in the 3rd Generation Partnership Project (3rd Generation Partnership Project, 3GPP) TR38.811. For example, in a dense urban area scenario and a communication scenario of a ka frequency band (band), when an NTN channel environment is a line of sight (LOS) path, a DS corresponding to an elevation angle of 30° is 17.83 nanoseconds (ns), and a DS corresponding to an elevation angle of 90° is 3.55 ns; or when the NTN channel environment is a non line of sight (NLOS) path, the DS corresponding to the elevation angle of 30° is 100 ns, and the DS corresponding to the elevation angle of 90° is 11.22 ns. For example, in a suburban scenario and a communication scenario of a ka frequency band (band), when an NTN channel environment is a LOS path, a DS corresponding to an elevation angle of 30° is 1.91 ns, and a DS corresponding to the elevation angle of 90° is 4.72 ns; or when an NTN channel environment is an NLOS path, the DS corresponding to the elevation angle of 30° is 13.81 ns, and the DS corresponding to the elevation angle of 90° is 2.04 ns.

With reference to the CP defined in the NR system and the multipath delay spread of the NTN channel, it can be learned that CP sizes that are for different SCSs and that are defined in the NR system are far greater than the multipath delay spread of the NTN channel. For example, in a Ka frequency band, an SCS in NR is generally 120 kHz, a long CP is 1.11 $\mu$s, and a short CP is 0.59 $\mu$s, but a multipath delay spread of the NTN in an NLOS scenario in a dense urban area is only 0.1 $\mu$s. A CP defined in a terrestrial network, for example, an NR system, is relatively redundant for the NTN. If a CP defined in the NR system is still used in the NTN, overheads of the CP lead to a waste of transmission resources in the NTN.

Based on this, an embodiment of this application provides a subframe structure used in an NTN scenario. A CP corresponding to a symbol in the subframe structure is less than a CP defined in the terrestrial network, so that overheads of the CP can be reduced, and the CP can be converted into a resource used for information transmission in the NTN.

For example, a quantity of symbols included in a subframe in the terrestrial network may be extended according to the following principle: A CP corresponding to a symbol used for NTN communication is greater than a multipath delay spread of an NTN channel. In addition, when it is ensured that a quantity of extended symbols of the subframe in the terrestrial network is an integer, the CP corresponding to the symbol used for NTN communication is as close as possible to the multipath delay spread of the NTN channel, that is, the CP corresponding to the symbol used for NTN communication is slightly greater than the multipath delay spread of the NTN channel.

A subframe used for terrestrial network communication is denoted as a first subframe, and a time domain resource that is used for NTN communication and whose duration is the same as that of the first subframe is denoted as a first time unit. According to the foregoing principle, a relationship between the first time unit and the first frame may include that a quantity N of symbols in the first time unit is greater than a quantity M of symbols in the first subframe. A value of a CP corresponding to the symbol in the first time unit is less than a value of a CP corresponding to the symbol in the first frame. The value of the CP may also be described as a length of the CP. For example, a value of a long CP corresponding to the first time symbol unit is less than a value of a long CP corresponding to a symbol in the first frame, and a value of a short CP corresponding to the first time symbol unit is less than a value of a short CP corresponding to a symbol in the first frame.

Optionally, the quantity N of symbols in the first time unit may be determined by using the following relational expression (1):

$$ N = \min_{n} \left\lfloor \frac{Symbol_t \times n}{\frac{Sf_t}{Symbol_t} \times DS} \right\rfloor \geq 1 \quad (1) $$

min indicates that a value of N is a minimum value of n, and a value of n meets the n following relational expression (2):

$$ \left\lfloor \frac{Symbol_t \times n}{\frac{Sf_t}{Symbol_t} \times DS} \right\rfloor \geq 1 \quad (2) $$

$Symbol_t$ represents duration occupied by one symbol, and symbols in different SCS scenarios have different duration; Sft represents the duration of the first time unit, for example, the duration of the first subframe is 1 ms, and the duration of the first time unit is also 1 ms; and DS represents the multipath delay spread of the NTN channel, and $\lfloor \ \rfloor$ represents a rounding down operator.

Further, the value of the short CP (denoted as $CP_{short}$) and the value of the long CP (denoted as $CP_{Long}$) that correspond to symbols in the first time unit may be determined by using the following relational expressions (3) and (4) respectively.

$$ CP_{short} = \left\lfloor \frac{Symbol_t \times N}{\frac{Sf_t}{Symbol_t} - N} \right\rfloor \quad (3) $$

$$CP_{Long} = \frac{Symbol_t \times N - CP_{short} \times (N-2)}{2} \quad (4)$$

Structures of first time units corresponding to different SCSs in the NTN may be configured according to the foregoing relational expressions (1) to (4). For example, in a scenario of a dense urban area in which an NTN channel environment is a LOS path, a multipath delay spread corresponding to an elevation angle of 30° is 17.83 ns. Table 2 shows a structure of a first time unit (1 ms) corresponding to the scenario.

Table 2

| Numerology ($\mu$) | SCS (kHz) | Long CP (ns) | Short CP (ns) | CP overhead | Quantity of symbols in 1 ms |
|---|---|---|---|---|---|
| 0 | 15 | 5203.2 | 4682.9 | 6.6% | 14 + 0 |
| 1 | 30 | 1178.9 | 1146.3 | 3.3% | 28 + 1 |
| 2 | 60 | 447.15 | 276.42 | 1.67% | 56 + 3 |
| 3 | 120 | 357.72 | 65.04 | 0.83% | 112 + 7 |
| 4 | 240 | 325.2 | 32.52 | 0.83% | 224 **+ 14** |
| 5 | 480 | 487.8 | 24.39 | 1.25% | **448** + 26 |
| 6 | 960 | 32.52 | 24.39 | 2.29% | 896 **+ 42** |

The following describes in detail, based on a structure (a quantity of symbols) of the first time unit, structures of a subframe and a system frame that are used for NTN communication.

Example 1: The first time unit may be used as a subframe used for NTN communication. For example, any subframe used for NTN communication is denoted as a second subframe. It may be understood that duration of the second subframe is the same as the duration of the first time unit; duration of a subframe in the NTN is the same as duration of a subframe in the terrestrial network, for example, both are 1 ms; and duration of a system frame in the NTN is the same as duration of a system frame in the terrestrial network, for example, both are 10 ms. A difference lies in that a quantity N of symbols in the second subframe is greater than the quantity M of symbols in the first subframe.

Optionally, N - M symbols extended (or referred to as added) in the second subframe relative to the first subframe may be inserted into at least one slot in the first subframe. According to this design, a quantity of symbols included in at least one slot (for example, denoted as a maxi-slot) in the second subframe (that is, the first time unit) is greater than a quantity of symbols included in any slot (for example, denoted as a normal-slot) in the first subframe.

With reference to content in Table 1 and Table 2, that the SCS is 120 kHz is used as an example, and N - M is 7. That is, the quantity of symbols in the second subframe is extended by 7 compared with the quantity of symbols in the first subframe. In addition, the first subframe includes eight slots, and a quantity of symbols included in each slot is 14. The extended seven symbols are inserted between every two slots in the first subframe, to obtain the second subframe (that is, the first time unit). The second subframe still includes eight slots, but the quantity of symbols in at least one slot is greater than 14. For example, two adjacent slots may share a symbol inserted between the two slots, or it may be understood as that each slot may include a symbol inserted between the slot and a slot adjacent to the slot, and two adjacent slots in the second subframe include an overlapping symbol.

For example, FIG. 5A shows an NTN subframe structure. Eight slots are numbered starting from 0, and are denoted as a slot 0 to a slot 7. A symbol 0 is inserted between the slot 0 and a slot 1, and the slot 0 includes 14 original symbols and the symbol 0, that is, the slot 0 in the second subframe includes 15 symbols. A symbol 1 is inserted between the slot 1 and a slot 2, and the slot 1 includes 14 original symbols, the symbol 0, and the symbol 1, that is, the slot 1 in the second subframe includes 16 symbols. By analogy, each of the slot 2 to a slot 6 includes 16 symbols. A symbol 6 is inserted between the slot 6 and a slot 7, and the slot 7 includes 14 original symbols and the symbol 6, that is, the slot 7 in the second subframe includes 15 symbols.

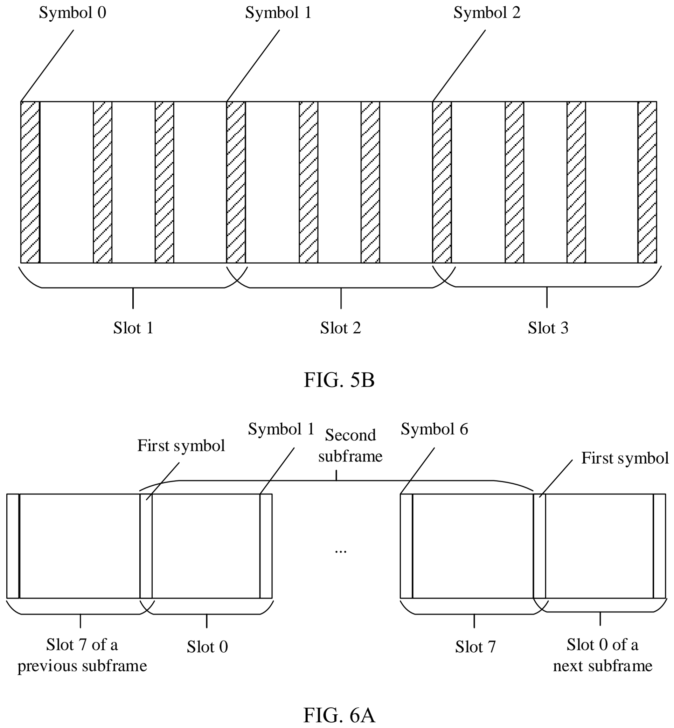

Optionally, an overlapping symbol in the second subframe may be used for transmission of a demodulation reference signal (demodulation reference signal, DMRS). In correspondence to the example described in FIG. 5A, a quantity of symbols used for DMRS transmission in slots 1 to 6 in the second subframe is 4, and these symbols are evenly distributed; and a quantity of symbols used for DMRS transmission in the slot 0 and the slot 7 in the second subframe is 3, and these symbols are evenly distributed. In an example, FIG. 5B shows symbols used for DMRS transmission in slots 1 to 3 by filling with slashes. In such a design, enhanced transmission can be performed on the DMRS by using a transmission resource (symbol) saved by shortening the CP, so that pilots are evenly distributed, channel estimation performance can be improved, and pilot overheads are not increased.

In the foregoing design, a solution for sharing a symbol by slots in a subframe is described. In another possible implementation, a solution for sharing a symbol across subframe slots may be further designed. For example, it may be understood that subframes are not distinguished in a system frame of the NTN, and an overlapping symbol may be included between any two adjacent slots.

For example, FIG. 6A shows a structure of a system frame of the NTN. Based on FIG. 5A, a first symbol of a slot 0 in a second subframe may be shared by a slot 7 in a previous subframe and a slot 0 in the second subframe. Similarly, a first symbol of a slot 0 in a next subframe of the second subframe may be shared by a slot 7 in the second subframe and a slot 0 in a next subframe. Based on such a design, the slot 7 in the second subframe may be further extended by one symbol, so that the slot 7 includes 16 symbols, while the slot 0 includes 15 symbols.

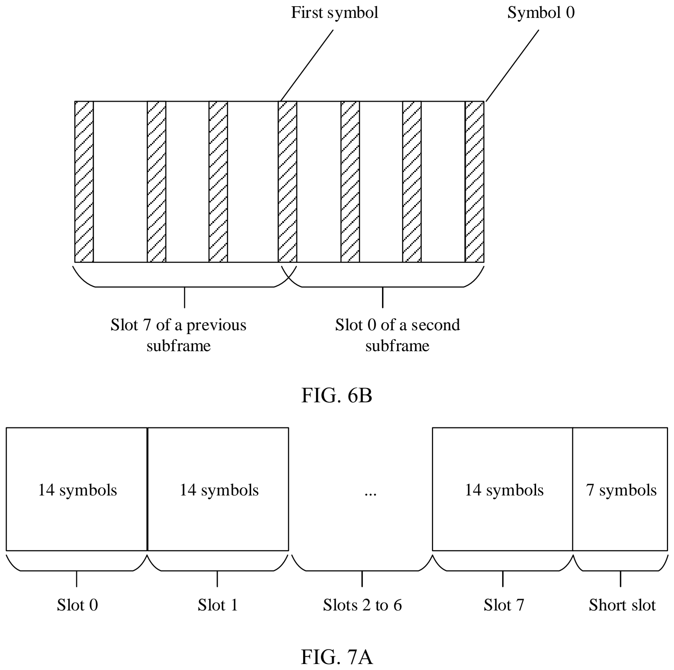

In addition, optionally, all symbols shared by cross-subframe slots may be used for DMRS transmission. For example, with reference to FIG. 6A, when a first symbol in a slot 0 in any subframe used for NTN communication is used for DMRS transmission, symbols used for DMRS transmission in slots 0 to 6 in the second subframe may be extended to four, and these symbols are evenly distributed. For example, FIG. 6B shows that a slot 7 in a subframe previous to the second subframe and a slot 0 in the second subframe include four DMRS symbols by filling with slashes. In such a design, enhanced transmission can be performed on the DMRS by using a transmission resource (symbol) saved by shortening the CP, so that pilots are evenly distributed, channel estimation performance can be improved, and pilot overheads are not increased.

Example 2: A quantity of slots in the first system frame used for terrestrial network communication is less than a quantity of slots in the second system frame used for NTN communication. Duration of a first system frame is the same as duration of a second system frame, which corresponds to the case that duration of the first time unit and duration of the first subframe are the same. It may be understood that a quantity of first time units included in the second system frame is the same as a quantity of first subframes included in the first system frame. A quantity of slots in a system frame is increased by using an extended symbol with a shortened CP, so that a quantity of scheduled slots used for a data channel can be increased, and a throughput of a communication system can be improved.

In a possible design, the first time unit may be used as a subframe used for NTN communication. For example, the second subframe is used to represent any subframe in the second system frame used for NTN communication. It may be understood that duration of the second subframe is the same as duration of the first time unit. A difference lies in that a quantity N of symbols in the second subframe is greater than a quantity M of symbols in the first subframe. N - M symbols extended in the second subframe relative to the first subframe may be defined as a new slot, and a quantity of symbols in the new slot is N - M. With reference to content in Table 1 and Table 2, for example, the SCS is 120 kHz, N - M is 7, and the new slot is shorter than a conventional slot including 14 symbols. In this case, the new slot may also be referred to as a short slot or a mini-slot. That is, based on this design, quantities of symbols in at least two slots in the second subframe may be different.

As shown in FIG. 7A, when the SCS is 120 kHz, a quantity of slots in the second subframe (that is, 1 ms in the first time unit 1) is one more than a quantity of slots in the first subframe, and the second subframe includes eight conventional slots (14 symbols) and one short slot (7 symbols). It may be understood that, in a subframe used for NTN communication, the short slot may be a first slot, a slot in a middle part, or a last slot in the subframe. This is not limited in this embodiment of this application. For example, FIG. 7A shows that the short slot is arranged after eight conventional slots as the last slot. In this design, one short slot is added between every 1 ms, so that a processing delay can be shortened.

In another possible design, N - M symbols are extended in the first time unit in the second system frame compared with the first subframe in the first system frame. From a perspective of the second system frame, when the second system frame includes L first time units, L × (N - M) symbols are extended in the second system frame compared with the first system frame, and the L × (N - M) symbols may form one or more slots.

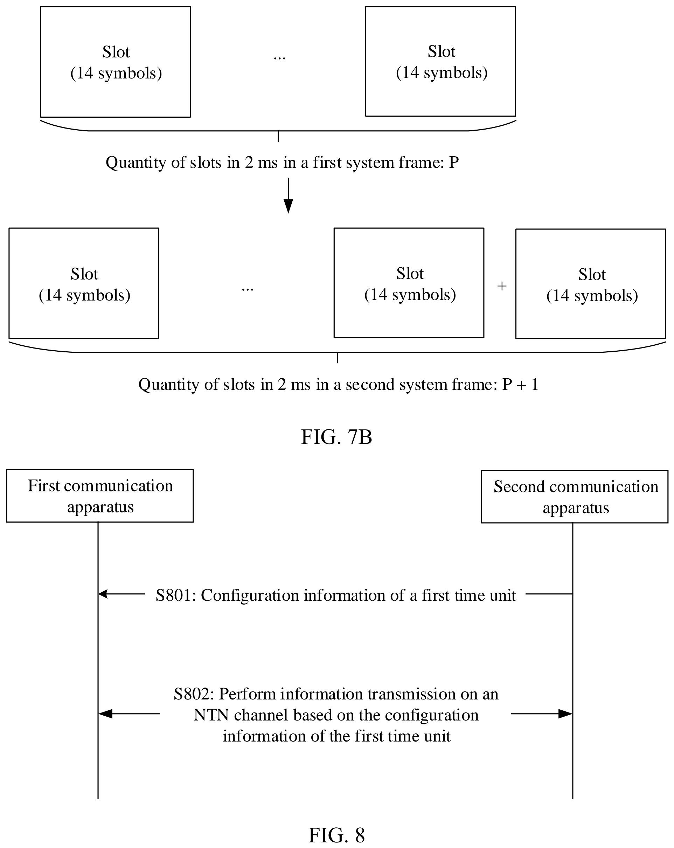

For example, the SCS is 120 kHz, N - M is 7, the duration of the second system frame is 10 ms, and the duration of the first time unit is 1 ms. In this case, the second system frame is extended by 70 symbols compared with the first system frame, the 70 symbols may form five conventional slots, and a quantity of symbols in the conventional slot is 14. According to this design, the quantity of slots in the second system frame is five more than the quantity of slots in the first system frame, but a length of each slot remains unchanged, and each slot corresponds to 14 symbols; and duration corresponding to each slot also remains unchanged, and each slot corresponds to 1 ms. In the system frame structure shown in FIG. 7B, it may be understood that one slot is added to the second system frame every 2 ms compared with the first system frame.

Example 3: A symbol extended in the second system frame compared with the first system frame may be used to increase a resource used for SSB mapping. That is, a quantity of symbols used for SSB mapping in the second system frame is greater than a quantity of symbols used for SSB mapping in the first system frame. Such a design can increase a beam sweeping resource and reduce a beam sweeping cycle.

For example, in a current NR system, an SSB is mapped to the first 5 ms in the first system frame. When a CP is shortened and a symbol is extended in the second system frame, for an SCS of 120 kHz, the first time unit includes seven more symbols than the first subframe, and duration of the first time unit and duration of the first subframe are both 1 ms. This is equivalent to that seven symbols can be saved every 1 ms in the second system frame. In this case, 35 symbols can be saved in the first 5 ms in the second system frame. In a possible implementation, if 14 symbols constitute one slot, and one slot is mapped to two SSBs, 35 symbols may constitute two and a half slots, and the two and a half slots including the 35 symbols can be used to add mapping resources of five SSBs. For example, in a scenario in which an FR2 frequency band is used and the SCS is 120 kHz, in the second system frame, a mapping resource of one SSB occupies four symbols, and indexes of symbols to which the SSB is mapped may include $\{4,8,16,20\} + 28 \times n$, where n = 0,1,2,3,5,6,7,8,10,11,12,13,15,16,17,18, or 20, or may include $\{6\} + 28 \times n$, where n = 21. In another possible implementation, a quantity of slots included in the subframe is not changed, and 35 symbols saved in the first 5 ms of the slot included in the second system frame may be separately used for SSB mapping. For example, if a mapping resource of one SSB occupies four symbols, the 35 symbols can be used to add mapping resources of eight SSBs.

Based on the foregoing system frame and subframe structure designs used for NTN communication, an embodiment of this application further provides an information transmission method, and relates to communication between a first communication apparatus and a second communication apparatus. Optionally, the first communication apparatus is a terminal device, a relay device between the terminal device and a satellite device, or a terrestrial base station, and the second communication apparatus is a network device (for example, a satellite device), a core network device, a network management device, or the like. The method includes the following procedure.

S801: The second communication apparatus sends configuration information of a first time unit to the first communication apparatus.

The configuration information indicates a parameter configuration of the first time unit. For example, a parameter of the first time unit includes one or more of the following: a quantity N of symbols in the first time unit, a CP (for example, a long CP and/or a short CP) corresponding to a symbol in the first time unit, and a subcarrier spacing SCS corresponding to a symbol in the first time unit.

A value of N and a value (or referred to as a length) of the CP correspond to a multipath delay spread of an NTN channel. For details, refer to the relational expression (1) in the foregoing design. Details are not described again in this embodiment of this application.

Optionally, corresponding to the design of Table 2, the configuration information sent by the second communication apparatus may include a numerology (Numerology). For example, the identifier is 3, and parameters of the first time unit include: an SCS is 120 kHz, a value of a long CP is 357.72 ns, a value of a short CP is 65.04 ns, and a value of the quantity N of symbols is 119 (112 + 7).

S802: The first communication apparatus or the second communication apparatus performs information transmission on the NTN channel based on the configuration information of the first time unit.

For example, as shown in FIG. 8, information transmission is performed between the first communication apparatus and the second communication apparatus, for example, transmission of the foregoing SSB, DMRS, or a data channel.

With reference to the system frame and subframe structure designs used for NTN communication, a time domain resource can be extended by using reduced CP overheads, to perform information transmission in an NTN, so as to improve transmission performance of a physical layer link in the NTN.

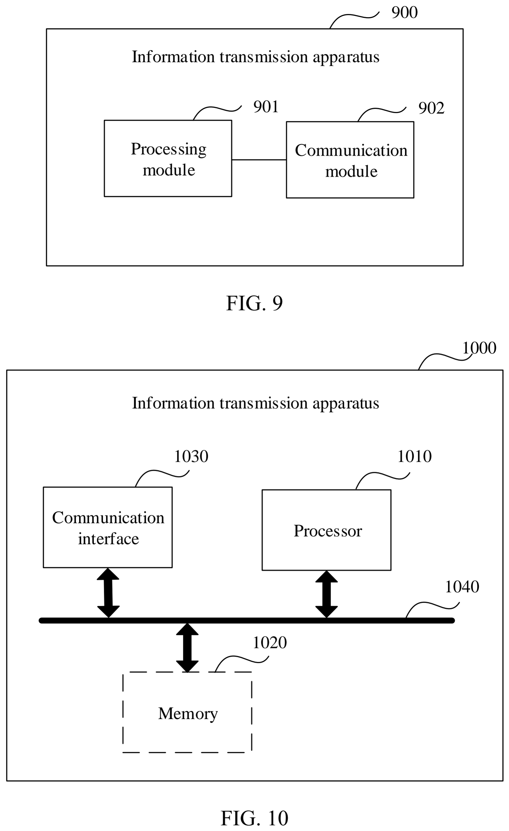

Based on a same concept, refer to FIG. 9. An embodiment of this application provides an information transmission apparatus 900. The information transmission apparatus 900 includes a processing module 901 and a communication module 902. The information transmission apparatus 900 may be a second communication apparatus, or may be a communication apparatus that is applied to the second communication apparatus or that is used in combination with the second communication apparatus and that can implement a method performed by the second communication apparatus. Alternatively, the information transmission apparatus 900 may be a first communication apparatus, or may be a communication apparatus that is applied to the first communication apparatus or that is used in combination with the first communication apparatus and that can implement a method performed by the first communication apparatus.

The communication module may also be referred to as a transceiver module, a transceiver, a transceiver device, a transceiver apparatus, or the like. The processing module may also be referred to as a processor, a processing board, a processing unit, a processing apparatus, or the like. Optionally, the communication module is configured to perform a sending operation and a receiving operation on the second communication apparatus or the first communication apparatus in the foregoing method. A component that is in the communication module and that is configured to implement the receiving function may be considered as a receiving unit, and a component that is in the communication module and that is configured to implement the sending function may be considered as a sending unit. That is, the communication module includes the receiving unit and the sending unit.

When the information transmission apparatus 900 is applied to the first communication apparatus, the processing module 901 may be configured to implement a processing function of the first communication apparatus in the example shown in FIG. 8, and the communication module 902 may be configured to implement the receiving and sending functions of the first communication apparatus in the example shown in FIG. 8. Alternatively, the information transmission apparatus may be understood with reference to descriptions and the possible designs in the third aspect in the summary.

When the information transmission apparatus 900 is applied to the second communication apparatus, the processing module 901 may be configured to implement a processing function of the second communication apparatus in the example in FIG. 8, and the communication module 902 may be configured to implement the receiving and sending functions of the second communication apparatus in the example in FIG. 8. Alternatively, the information transmission apparatus may be understood with reference to descriptions and the possible designs in the fourth aspect in the summary.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using an entity apparatus. For example, if the apparatus is implemented by using a chip/chip circuit, the communication module may be an input/output circuit and/or a communication interface, and performs an input operation (corresponding to the foregoing receiving operation) and an output operation (corresponding to the foregoing sending operation). The processing module is an integrated processor, a microprocessor, or an integrated circuit.

Division into the modules in this embodiment of this application is an example, is merely division into logical functions, and may be other division during actual implementation. In addition, functional modules in examples of embodiments of this application may be integrated into one processor, each of the functional modules may exist alone physically, or two or more functional modules may be integrated into one module. The integrated module may be implemented in a form of hardware, or may be implemented in a form of a software functional module.

Based on a same technical concept, an embodiment of this application further provides an information transmission apparatus 1000. For example, the information transmission apparatus 1000 may be a chip or a chip system. Optionally, in this embodiment of this application, the chip system may include a chip, or may include a chip and another discrete component.

The information transmission apparatus 1000 may be configured to implement a function of any network element in the communication system described in the foregoing examples. The information transmission apparatus 1000 may include at least one processor 1010. Optionally, the processor 1010 is coupled to a memory. The memory may be located in the apparatus. Alternatively, the memory may be integrated with the processor. Alternatively, the memory may be located outside the apparatus. For example, the information transmission apparatus 1000 may further include at least one memory 1020. The memory 1020 stores a computer program, a computer program or instructions, and/or data necessary for implementing any one of the foregoing examples. The processor 1010 may execute the computer program stored in the memory 1020, to complete the method in any one of the foregoing examples.

The information transmission apparatus 1000 may further include a communication interface 1030, and the information transmission apparatus 1000 may exchange information with another device by using the communication interface 1030. For example, the communication interface 1030 may be a transceiver, a circuit, a bus, a module, a pin, or a communication interface of another type. When the information transmission apparatus 1000 is a chip-type apparatus or a circuit, the communication interface 1030 in the apparatus 1000 may alternatively be an input/output circuit, and may input information (or referred to as receiving information) and output information (or referred to as sending information). The processor is an integrated processor, a microprocessor, an integrated circuit, or a logic circuit, and the processor may determine output information based on input information.

The coupling in this embodiment of this application may be an indirect coupling or a communication connection between apparatuses, units, or modules in an electrical form, a mechanical form, or another form, and is used for information exchange between the apparatuses, the units, or the modules. The processor 1010 may operate in collaboration with the memory 1020 and the communication interface 1030. A specific connection medium between the processor 1010, the memory 1020, and the communication interface 1030 is not limited in embodiments of this application.

Optionally, refer to FIG. 10. The processor 1010, the memory 1020, and the communication interface 1030 are connected to each other through a bus 1040. The bus 1040 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is for representing the bus in FIG. 10, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or can be performed by using a combination of hardware in the processor and a software module.

In embodiments of this application, the memory may be a non-volatile memory, a hard disk drive (hard disk drive, HDD) or a solid-state drive (solid-state drive, SSD), or may be a volatile memory (volatile memory), for example, a random access memory (random-access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

In a possible implementation, the information transmission apparatus 1000 may be applied to a first communication apparatus. Specifically, the information transmission apparatus 1000 may be the first communication apparatus, or may be an apparatus that can support the first communication apparatus in implementing a function of the first communication apparatus in any one of the foregoing examples. The memory 1020 stores a computer program (or instructions) and/or data for implementing the function of the first communication apparatus in any one of the foregoing examples. The processor 1010 may execute the computer program stored in the memory 1020, to complete the method performed by the first communication apparatus in any one of the foregoing examples. When being applied to the first communication apparatus, a communication interface in the information transmission apparatus 1000 may be configured to interact with a second communication apparatus, and send information to the second communication apparatus or receive information from the second communication apparatus.

In another possible implementation, the information transmission apparatus 1000 may be applied to the second communication apparatus. Specifically, the information transmission apparatus 1000 may be the second communication apparatus, or may be an apparatus that can support the second communication apparatus and implement a function of the second communication apparatus in any one of the foregoing examples. The memory 1020 stores a computer program (or instructions) and/or data for implementing the function of the second communication apparatus in any one of the foregoing examples. The processor 1010 may execute the computer program stored in the memory 1020, to complete the method performed by the second communication apparatus in any one of the foregoing examples. Applied to the second communication apparatus, a communication interface in the information transmission apparatus 1000 may be configured to interact with the first communication apparatus, and send information to the first communication apparatus or receive information from the first communication apparatus.

The information transmission apparatus 1000 provided in this example may be applied to the first communication apparatus to complete the method performed by the first communication apparatus, or may be applied to the second communication apparatus to complete the method performed by the second communication apparatus. Therefore, for technical effects that can be obtained by the information transmission apparatus 1000, refer to the foregoing method examples. Details are not described herein again.

Based on the foregoing example, an embodiment of this application provides a communication system, including a first communication apparatus and a second communication apparatus. The first communication apparatus and the second communication apparatus may implement the method provided in the example shown in FIG. 8.

All or some of the technical solutions in embodiments of this application may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a special-purpose computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device (for example, a server or a data center) that integrates one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, on a premise that there is no logical contradiction, examples may be mutually referenced. For example, methods and/or terms in the method embodiments may be mutually referenced, functions and/or terms in the apparatus embodiments may be mutually referenced, and functions and/or terms between the apparatus examples and the method examples may be mutually referenced.

**Claims**

1. An information transmission method, comprising:

   receiving, by a first communication apparatus, configuration information of a first time unit, wherein the configuration information indicates a quantity N of symbols in the first time unit and a cyclic prefix CP corresponding to the symbol in the first time unit, a value of N and a value of the CP correspond to a multipath delay spread of a non-terrestrial network NTN channel, and N is a positive integer; and

performing, by the first communication apparatus, information transmission on the NTN channel based on the configuration information of the first time unit.

2. An information transmission method, comprising:

sending, by a second communication apparatus, configuration information of a first time unit, wherein the configuration information indicates a quantity N of symbols in the first time unit and a cyclic prefix CP corresponding to the symbol in the first time unit, a value of N and a value of the CP correspond to a multipath delay spread of a non-terrestrial network NTN channel, and N is a positive integer; and

performing, by the second communication apparatus, information transmission on the NTN channel based on the configuration information of the first time unit.

3. The method according to claim 1 or 2, wherein duration of the first time unit is the same as duration of a first subframe, the first subframe is a subframe used for terrestrial network communication, a quantity of symbols in the first subframe is less than N, and a value of the CP corresponding to the symbol in the first time unit is less than a value of a CP corresponding to the symbol in the first subframe.

4. The method according to any one of claims 1 to 3, wherein the value of N is a minimum value of n, n is a positive integer, and a value of n meets the following relational expression:

$$\left\lfloor \frac{Symbol_t \times n}{\frac{Sf_t}{Symbol_t} \times DS} \right\rfloor \geq 1$$

wherein $Symbol_t$ represents duration occupied by one symbol, Sft represents the duration of the first time unit, DS represents the multipath delay spread of the NTN channel, and $\lfloor \rfloor$ represents a rounding down operator.

5. The method according to claim 4, wherein the CP corresponding to the symbol in the first time unit comprises $CP_{Long}$ and $CP_{short}$, a value of $CP_{Long}$ is greater than a value of $CP_{short}$, and the value of $CP_{Long}$ and the value of $CP_{short}$ meet the following formula:

$$CP_{short} = \left\lfloor \frac{Symbol_t \times N}{\frac{Sf_t}{Symbol_t} - N} \right\rfloor;$$

and

$$CP_{Long} = \frac{Symbol_t \times N - CP_{short} \times (N - 2)}{2}.$$

6. The method according to any one of claims 1 to 5, wherein the first time unit is a subframe used for NTN communication, a quantity of symbols comprised in at least one slot in the first time unit is greater than a quantity of symbols comprised in any slot in the first subframe, and the first subframe is a subframe used for terrestrial network communication.

7. The method according to claim 6, wherein two adjacent slots in the first time unit comprise an overlapping symbol, and the overlapping symbol is used for transmission of a demodulation reference signal DMRS.

8. The method according to any one of claims 1 to 5, wherein a quantity of slots in a first system frame used for terrestrial network communication is less than a quantity of slots in a second system frame used for NTN communication, the second system frame comprises a plurality of first time units, and duration of the first system frame is the same as duration of the second system frame.

9. The method according to claim 8, wherein the first time unit is a subframe used for NTN communication, a quantity of slots in the first time unit is greater than a quantity of slots in the first subframe, and the first subframe is a subframe used for terrestrial network communication.

10. The method according to claim 9, wherein at least two slots in the first time unit correspond to different duration.

11. The method according to any one of claims 8 to 10, wherein a quantity of symbols used for mapping a synchronization signal block SSB in the second system frame is greater than a quantity of symbols used for mapping the SSB in the first system frame.

12. An information transmission apparatus, configured to implement the method according to any one of claims 1 and 3 to 11 or the method according to any one of claims 2 to 11.

13. An information transmission apparatus, comprising:
a processor, wherein the processor is coupled to a memory, and the processor is configured to invoke computer program instructions stored in the memory, to perform the method according to any one of claims 1 and 3 to 11 or the method according to any one of claims 2 to 11.

14. A computer-readable storage medium, wherein the computer-readable storage medium stores instructions; and when the instructions are run on a computer, the computer is enabled to perform the method according to any one of claims 1 and 3 to 11 or the method according to any one of claims 2 to 11.

15. A computer program product, comprising instructions, wherein when the instructions are run on a computer, the computer is enabled to perform the method according to any one of claims 1 and 3 to 11 or the method according to any one of claims 2 to 11.

16. A communication system, comprising a first communication apparatus and a second communication apparatus, wherein the first communication apparatus is configured to perform the method according to any one of claims 1 and 3 to 11, and the second communication apparatus is configured to perform the method according to any one of claims 2 to 11.

Communication system 100

Network device 110

Terminal device 101

Terminal device 102

Terminal device 103

Terminal device 105

Terminal device 106

Terminal device 104

FIG. 1

FIG. 2

5G user plane processing unit (UPF)

Data network

5G base station

5G new air interface

NG interface

Terminal

Terrestrial station

Xn interface

5G access and mobility management function (AMF)

5G new air interface

5G session management function (SMF)

Terminal

5G base station

5G control plane

FIG. 3

Satellite 401    Satellite 402    Satellite 403

Terrestrial
station device

FIG. 4

Symbol 0    Symbol 1    Symbol 2    Symbol 6

| 14 symbols | 14 symbols | 14 symbols | ... | 14 symbols |

Slot 0    Slot 1    Slot 2    Slot 7

FIG. 5A

FIG. 5B

FIG. 6A

First symbol                           Symbol 0

Slot 7 of a previous subframe             Slot 0 of a second subframe

## FIG. 6B

| 14 symbols | 14 symbols | ... | 14 symbols | 7 symbols |

Slot 0         Slot 1        Slots 2 to 6        Slot 7        Short slot

## FIG. 7A

Slot
(14 symbols)

...

Slot
(14 symbols)

Quantity of slots in 2 ms in a first system frame: P

Slot
(14 symbols)

...

Slot
(14 symbols)

+

Slot
(14 symbols)

Quantity of slots in 2 ms in a second system frame: P + 1

FIG. 7B

First communication
apparatus

Second communication
apparatus

S801: Configuration information of a first time unit

S802: Perform information transmission on an
NTN channel based on the configuration
information of the first time unit

FIG. 8

900

Information transmission apparatus

901

Processing module

902

Communication module

FIG. 9

1000

Information transmission apparatus

1030

Communication interface

1010

Processor

1040

1020

Memory

FIG. 10

## INTERNATIONAL SEARCH REPORT

| International application No. |
| --- |
| **PCT/CN2024/074175** |

| A. CLASSIFICATION OF SUBJECT MATTER |
| --- |
| H04B7/185(2006.01)i |
| According to International Patent Classification (IPC) or to both national classification and IPC |

| B. FIELDS SEARCHED |
| --- |
| Minimum documentation searched (classification system followed by classification symbols) |
| IPC: H04B |
| Documentation searched other than minimum documentation to the extent that such documents are included in the fields searched |
| Electronic data base consulted during the international search (name of data base and, where practicable, search terms used) |
| CNTXT, EPTXT, USTXT, VEN, WOTXT: NTN信道, 发送, 符号, 接收, 配置信息, 时间单元, 数量, 信息传输, 循环前缀, CP, NTN, number, time, symbol, information, receive, element, configuration, transmit |

| C. DOCUMENTS CONSIDERED TO BE RELEVANT | | |
| --- | --- | --- |
| Category* | Citation of document, with indication, where appropriate, of the relevant passages | Relevant to claim No. |
| X | WO 2022000391 A1 (HUAWEI TECHNOLOGIES CO., LTD.) 06 January 2022 (2022-01-06) description, page 21, line 20 to page 24, line 12 | 1-2, 12-16 |
| A | CN 110445587 A (HUAWEI TECHNOLOGIES CO., LTD.) 12 November 2019 (2019-11-12) entire document | 1-16 |
| A | CN 112399593 A (HUAWEI TECHNOLOGIES CO., LTD.) 23 February 2021 (2021-02-23) entire document | 1-16 |
| A | US 2018367358 A1 (HUAWEI TECHNOLOGIES CO., LTD.) 20 December 2018 (2018-12-20) entire document | 1-16 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 April 2024** | **08 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/074175**

| Patent document cited in search report | | | Publication date (day/month/year) | Patent family member(s) | | | Publication date (day/month/year) |
|---|---|---|---|---|---|---|---|
| WO | 2022000391 | A1 | 06 January 2022 | JP | 2023531559 | A | 24 July 2023 |
| | | | | WO | 2022000688 | A1 | 06 January 2022 |
| | | | | EP | 4170951 | A1 | 26 April 2023 |
| | | | | EP | 4170951 | A4 | 06 December 2023 |
| | | | | US | 2023142451 | A1 | 11 May 2023 |
| CN | 110445587 | A | 12 November 2019 | CA | 3098616 | A1 | 07 November 2019 |
| | | | | WO | 2019210778 | A1 | 07 November 2019 |
| | | | | EP | 3780467 | A1 | 17 February 2021 |
| | | | | EP | 3780467 | A4 | 09 June 2021 |
| | | | | US | 2021075658 | A1 | 11 March 2021 |
| | | | | US | 11665038 | B2 | 30 May 2023 |
| CN | 112399593 | A | 23 February 2021 | None | | | |
| US | 2018367358 | A1 | 20 December 2018 | WO | 2018228454 | A1 | 20 December 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310127842

- TR 38811